# EUROPÄISCHE PATENTANMELDUNG

(11) **EP 2 408 054 A1**
(43) Veröffentlichungstag der Anmeldung: **18.01.2012**
(21) Anmeldenummer: 11167153.3
(22) Anmeldetag: 23.05.2011
(51) Int. Cl.: H01M 10/50

(54) **Kühlsystem**

(30) Priorität: 15.07.2010 DE 102010031414
(71) Anmelder: Behr GmbH & Co. KG, 70469 Stuttgart (DE)
(72) Erfinder: Liermann, Andreas, 67117, Limburgerhof (DE); Stratmann, Lars, 70435, Stuttgart (DE); Pitz, Eric, 70199, Stuttgart (DE)
(74) Vertreter: Grauel, Andreas

(57) **Zusammenfassung**

Kühlsystem (1) zur bedarfsorientierten Regelung der Temperatur einer Hochleistungsbatterie, insbesondere zur Anwendung in Elektro- oder Hybrid-Fahrzeugen. mittels eines in seiner Kühlleistung verstellbaren Batterie-Kühlsystems mit von einem Kühlmittel durchströmten Kühlkanälen, wobei als Stellsignal für die Durchströmung ein Temperatur..Sollwert ( T Sₒₗₗ..Bₐₜ = T_{S}oll_min_Bat + (Tₖₒᵣᵣ x Faktorₖₒᵣᵣ )) in einem einschleifigen Regelkreis mit kennliniengeschützter Sollwertgenerierung (3) vorgesehen ist.

## Beschreibung

Die Erfindung betrifft ein Kühlsystem zur bedarfsorientierten Regelung der Temperatur einer Hochleistungsbatterie, insbesondere zur Anwendung in Elektro- oder Hybrid-Fahrzeugen gemäß Anspruch 1.

Beim Einsatz von modernen Hochleistungsbatterien, die aus einer Anzahl einzelner Zellen aufgebaut sind (z.B. Akkumulatoren bzw. Sekundärbatterien), wie z.B, in Elektro- oder Hybridfahrzeugen, ist dafür Sorge zu tragen, dass sich die Temperatur der Batterie während des Betriebs in einem gewissen Intervall befindet, um die Effizienz, Funktionstüchtigkeit und Sicherheit der Einrichtung sicherzustellen. Einerseits sinkt der Wirkungsgrad der Batleriezellen bei Unterschreitung einer geeigneten Betriebstemperatur sehr stark und die Zellen produzieren eine hohe Verlustleistung. Andererseits laufen oberhalb eines geeigneten Betriebsbereichs Prozesse innerhalb der Zelle ab, die zu irreversiblen Schädigungen führen können. Ferner dürfen zur Vermeidung einer ungleichmäßigen und damit einhergehenden verstärkten Alteterung einzelner Balteriezellen die Temperaturunterschiede der Einzelzellen und in dem gesamten Batteriestack bestimmte Grenzwerte nicht überschreiten. Zur Batteriekühlung wird vorzugsweise ein Kühlmedium durch Kühlkanäle geführt, die im Kontakt mit der Batterie stehen. Als Kühlmedium können z.B. Kältemittel (vorzugsweise aus der Klimaanlage) oder auch Kühlmittel verwendet werden. Da sich die Belastung der Batteriezelle und damit die abzuführende Verlustwärme während des Wirkbetriebes stark ändert, ist die Kühlvorrichtung mit einer geeigneten Temperaturregelung zu versehen.

Die DE 10 2005 023 365 A1 betrifft ein Verfahren zum Bestimmen einer Größe eines Ladungsspeichers, insbesondere einer Batteriegröße. Es ist vorgesehen, die zukünftige elektrische Belastung der Batterie zu schätzen und daraus die zukünftige Entwicklung einer Batteriegröße, wie z.B. der Batterietemperatur oder des Ladezustands, mittels eines mathematischen Batteriemodells zu bestimmen. Die Belastung, der die Fahrzeugbatterie ausgesetzt sein wird, kann dabei im Wesentlichen auf zwei Arten abgeschätzt werden: 1) aus dem Belastutigsverlauf in der Vergangenheit und 2) aus Informationen über das zukünftige Fahrverhalten des Fahrzeugs. Im ersten Fall erfolgt eine Extrapolation der bisherigen Belastung in die Zukunft, im zweiten Fall wird die zukünftige Belastung aus Informationen über den weiteren Fahrverlauf geschätzt, die z.B. von einem Navigationssystem erhalten werden können, Die Abschätzung der zukünftigen Belastung kann dann von einem Batterie-Managementsystem im Rahmen des Batterie-Managements berücksichtigt werden.

Nachteilig an den aus dem Stand der Technik bekannten Kühlsystemen ist jedoch, dass keine bedarfsgerechte Batteriekühlung d.h. keine Berücksichtigung dynamischer Einfluss- und/oder Störgrößen vorgesehen ist,

Es ist daher Aufgabe der Erfindung, ein verbessertes Kühlsystem zur Verfügung zu stellen. Diese Aufgabe wird gelöst durch ein Kühlsystem mit den Merkmalen des Anspruchs 1. Vorteilhafte Ausgestaltungen sind Gegenstand der Unteransprüche.

Erfindungsgemäß wird vorgeschlagen, dass ein Kühlsystem zur bedarfsorientierten Regelung der Temperatur einer Hochleistungsbatterie, insbesondere zur Anwendung in Elektro- oder Hybrid-Fahrzeugen vorgesehen ist, mit einem mittels eines in seiner Kühlleistung verstellbaren Batterie-Kühlsystems und mit von einem Kühlmittel durchströmten Kühlkanälen, wobei als Stellsignal für die Durchströmung ein Temperatur-Sollwert ( T _{Soll}__{Bat} = T_{soll_min_Bat} ⁺ ( Tₖₒᵣᵣ X Faktorₖₒᵣᵣ ) in einem einschleifigen Regelkreis mit kennliniengeschützter Sollwertgenerierung vorgesehen ist. Das erfindungsgemäße Kühlsystem gestattet somit unter Verwendung einer kennliniengestützten Sollwertgenerierung und Störgrößenaufschaltung eine bedarfsorientierte Temperierung von Hochleistungsbatterien. Die erforderliche Kühlleistung einer in einem Hybrid- oder Elektro-Fahrzeug verbauten Hochleistungsbatterie ist hauptsächlich vom aktuellen Lade- bzw. Entladestrom und/oder der Umgebungstemperatur abhängig. Hoher Stromfluss und/oder hohe Umgebungstemperaturen erfordern prinzipiell eine Steigerung der bereitzustellenden Kühlleistung, Das Kühlsystem basiert auf einem einschleifigen Regelkreis mit zusätzlicher Störgrößenaufschaltung und vorgeschalteter, kennliniengestützer Sollwertgenerierung.

Eine Ausführungsform sieht eine Vorgabe der zulässigen Batterie-Solltemperatur ( T_{soll_Bat} = T_{soll_min_Bat} + ( Tₖₒᵣᵣ x Faktorₖₒᵣᵣ ) in den Grenzen Zwischen T_{soll_min_Bat} und T_{soll_max_Bat} vor,

Beispielsweise kann eine kennliniengeschützte Sollwertgenerierung unter Berücksichtigung der Umgebungstemperatur T_{U} vorgesehen sein. Beispielsweise kann eine Sollwertgenerierung unter Berücksichtigung des jeweiligen Fahrmodus, insbesondere "Sport" bzw. "Normal" vorgesehen sein.

Eine weitere Ausführungsform kann einen im Fahrmodus "Sport" ohne Korrekturschaltung auf seinen zulässigen Minimalwert T_{soll_min_Bat} gesetzten und im Fahrmodus "Normal" mit Korrekturschaitung als Funktion der Umgebungstemperatur T_{U} gesetzten Sollwert für die Batterietemperatur vorsehen. Im Fall Fahrmodus "Sport" ist mit großen Stromflüssen zum elektrischen Antriebs- bzw. Boostermotor zu rechnen ( zB. 150A ), so dass der e:nzuregelnde Schwert für die Batterietemperatur ohne Korrekturaufschal" tung auf seinen zulässigen Minimalwert T_{Soll_min_Bat} gesetzt wird, Im Fahrmodus "Normal" kann ferner vorgesehen sein, dass eine Korrekturaufschaltung als Funktion der Umgebungstemperatur Tᵤ erfolgen kann,

Eine bevorzugte Ausführungsform kann eine Definition des Sollwertes der Batterietemperatur T_{Soll_Bat} aus der Beziehung ( T_{Soll_Bat} = T_{Soll_min_Bat} + (TₖₒᵣᵣX Faktorₖₒᵣᵣ ) und des maximalen Korrekturwertes der Batterietemperatur T_{korr_max} aus der Beziehung T_{korr_max} =T_{Soll_max_Bat} - T_{Soll_min_Bat} jeweils unter Gewichtung von Umgebungstemperatur Tᵤ und gewähltem Fahrmodus vorsehen.

Zwischen der Störgröße Lade- bzw. Entladestrom und der Mess- bzw. Regelgröße Batterietemperatur besteht eine zeitlich verzögerte Wirkung, die selbst bei einem dynamisch abgestimmten Temperaturregler nur relativ langsam ausgeregelt werden kann. Daher kann eine weitere bevorzugte Ausführungsform eine Störgrößenunterdrückung durch Aufschaltung des Betragswertes des jeweils aktuellen Batteriestromes I_{B} als kennliniendefinierte Korrekturgröße Y_{korr_1} auf das Stellsignal vorsehen.

Beispielsweise kann eine Regelung der Temperatur mittels eines Stellorgans für das Kühlmittel in Form eines Regelventils im Kühlmittel-Kreislauf, eine Regelung der Temperatur mittels einer Pumpe im Kühlmittel-Kreislauf oder eine Regelung der Temperatur mittels eines Kompressors im Kühlmittel-Kreislauf vorgesehen sein.

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung beschrieben ist. Dabei können die in den Ansprüchen und in der Beschreibung erwähnten Merkmale jeweils einzeln für sich oder in beliebiger Kombination erfindungswesentlich sein.

Es zeigt:

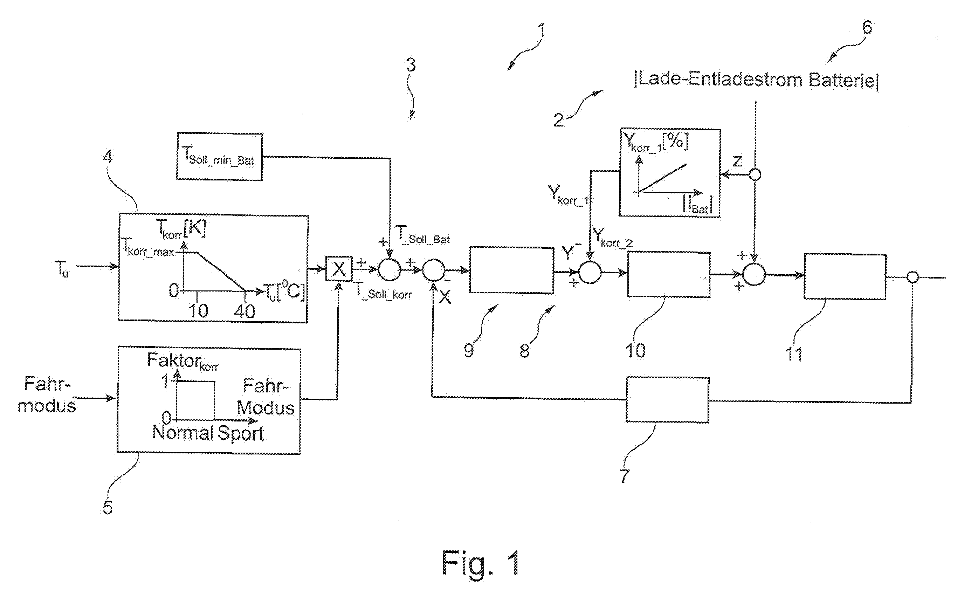

**Fig. 1** eine schematische Blockbilddarstellung eines Kühlsystems zur bedarfsorientierten Regelung einer Hochleistungsbatterie.

Das Kühlsystem 1 sieht einen einschleifigen Regelkreis mit zusätzlicher Störgrößenaufschaltung 2 und vorgeschalteter, kennliniengestützter Sollwertgenerierung 3 vor. Dabei wird die zulässige Solltemperatur T_{Soll_Bat} in den batteriespezifischen Grenzen zwischen T_{Soll_min_Bat} und T_{Soll_max_Bat} vorgegeben.

Resultierend aus der Gewichtung von Umgebungstemperatur Tᵤ (siehe 4) und dem gewählten Fahrmodus z.B. Normal oder Sport (siehe 5) bestimmt sich T_{Soll_korr}=Tₖₒᵣᵣ x Faktorₖₒᵣᵣ

Zwischen der Störgröße Lade- und Entladestrom 6 und der Mess- bzw. Regelgröße der Batterietemperatur 7 besteht eine zeitlich verzögerte Wirkung.

Aus diesem Grund wird zur Verbesserung der erzielbaren Regelgüte und gleichzeitigen Störunterdrückung der Betragswert des aktuellen Batteriestroms I_{B} über eine Kennlinie als Korrekturgröße Y_{korr_1} (siehe 8) auf das Reglersiellsignal 9 aufgeschaltet. Das Regelstellsignal 9 dient zur Ansteuerung eines Stellorgans 10, welches die Durchströmung der Kühlkanäle einer Kühleinheit 11 reguliert.

## Patentansprüche

1. Kühlsystem (1) zur bedarfsorientierten Regelung der Temperatur einer Hochleistungsbatterie, insbesondere zur Anwendung in Elektro- oder Hybrid-Fahrzeugen, mittels eines in seiner Kühlleistung verstellbaren Batterie-Kühlsystems mit von einem Kühlmittel durchströmten Kühlkanälen, wobei als Stellsignal für die Durchströmung ein Temperatur-Sollwert ( T_{Soll_Bat} = T_{Soll_min}__{Bat} + ( Tₖₒᵣᵣ X Faktorₖₒᵣᵣ )) in einem einschleifigen Regelkreis mit kennliniengeschützter Sollwertgenerierung (3) vorgesehen ist.

2. Kühlsystem nach Anspruch 1, **gekennzeichnet durch** eine Vorgabe der zulässigen Batterie-Solltemperatur (T_{Soll_Bat} = T_{Soll_min_Bat} + ( Tₖₒᵣᵣ X Faktorₖₒᵣᵣ) in den Grenzen zwischen T_{Soll_min_Bat} und T_{Soll_max_Bat}.

3. Kühlsystem nach Anspruch 1 und/oder 2, **gekennzeichnet durch** eine kennliniengeschützte Sollwertgenerierung (3) unter Berücksichtigung der Umgebungstemperatur Tᵤ (4).

4. Kühlsystem nach Anspruch 1 und/oder 2, **gekennzeichnet durch** eine Sollwertgenerierung unter Berücksichtigung des jeweiligen Fahrmodus, insbesondere "Sport" bzw. "Normal" (5),

5. Kühlsystem nach Anspruch 4, **gekennzeichnet durch** einen im Fahrmodus "Sport" (5) ohne Korrekturschaltung auf seinen zulässigen Minimalwert T_{Soll_min_Bat} gesetzten und im Fahrmodus "Normal" (5) mit Korrekturschaltung als Funktion der Umgebungstemperatur Tᵤ (4) gesetzten Schwert für die Batterietemperatur.

6. Kühlsystem nach zumindest einem der vorhergehenden Ausprüche, **gekennzeichnet durch** eine Definition des Sollwertes der Batterietemperatur T_{Soll_Bat} aus der Beziehung ( T_{Soll_Bat} = T_{Soll_min_Bat} + ( Tₖₒᵣᵣ X Faktorₖₒᵣᵣ )und des maximalen Korrekturwertes der Batterietemperatur T_{Korr_max} aus der Beziehung T_{korr_max} = T_{Soll_max_Bat} -T_{Soll_min_Bat} jeweils unter Gewichtung von Umgebungstemperatur Tᵤ (4) und gewähltem Fahrmodus (5).

7. Kühlsystem nach zumindest einem der vorhergehenden Ansprüche, **gekennzeichnet durch** eine Störgrößenunterdrückung **durch** Aufschaltung des Betragswertes des jeweils aktuellen Batteriestromes als kennliniendefinierte Korrekturgröße Y_{korr_1} (8) auf das Stellsignal.

8. Kühlsystem nach zumindest einem der Ansprüche 1 bis 7, **gekennzeichnet durch** eine Regelung der Temperatur mittels eines Stellorgans (10) für das Kühlmittel in Form eines Regelventils im Kühlmittel-Kreis!auf.

9. Kühlsystem nach zumindest einem der Ansprüche 1 bis 7, **gekennzeichnet durch** eine Regelung der Temperatur mittels einer Pumpe im Kühlmittel-Kreislauf.

10. Küh!system nach zumindest einem der Ansprüche 1 bis 7, **gekennzeichnet durch** eine Rege!ung der Temperatur mittels eines Kompres-. sors im Kühlmittel-Kreislauf
